# FASCICULE DE BREVET EUROPEEN

(11) **EP 2 522 867 B1**
(45) Date de publication et mention de la délivrance du brevet: **20.08.2014**
(21) Numéro de dépôt: 12305516.2
(22) Date de dépôt: 09.05.2012
(51) Int. Cl.: F16C 13/00, F16C 33/66, F16C 37/00, F16C 33/76, B30B 11/20, B02C 4/30, F16J 15/32

(54) **Galet presseur pour une presse à granules**
Andruckrolle für eine Granulatpresse
Pressure roller for a pellet press

(30) Priorité: 10.05.2011 FR 1153998
(43) Date de publication de la demande: 14.11.2012
(73) Titulaire: Etablissements Paul Deflandre, 08120 Bogny sur Meuse (FR)
(72) Inventeur: Deflandre, Claude, F-08800 LES HAUTES RIVIERES (FR)
(74) Mandataire: Rhein, Alain

(56) Documents cités:
- EP-A1- 1 486 450
- WO-A1-01/42672
- US-A- 3 838 898
- US-A- 5 186 548
- US-A1- 2010 183 759

## Description

La présente invention concerne une presse à granulés pour la transformation en granulés de matières diverses, par exemple du bois, en vue de son utilisation comme combustible, ou de la luzerne ou autres produits en granulés, en vue de son utilisation comme alimentation pour es animaux.

De telles presses sont, en général, équipées de filières annulaires, tournantes ou non. La matière introduite à l'intérieur de la filière est pressée par un ou plusieurs galets presseurs, la forçant à traverser les perforations de la filière. Les pressions élevées produisent une élévation de la température, ce qui produit une plastification de la lignine, qui devient alors une colle naturelle pour maintenir la matière sous forme de granulés. La matière peut aussi venir de l'extérieur de la filière, être pressée par un ou plusieurs galets presseurs, la forçant à traverser les perforations de la filière.

L'invention s'applique principalement à un tel galet presseur chargé de presser la matière contre une filière.

De tels galets comportent généralement un arbre excentré entouré par un palier ou un roulement à galets coniques, lui-même entouré par un rouleau. Ce rouleau est donc mobile en rotation par rapport à l'axe. Ainsi, en fixant l'axe du galet presseur sur un train à 2 ou 3 galets capable d'exercer un effort contre la filière, effort habituellement de l'ordre de 60 à 100 tonnes, le rouleau entre en contact avec la filière. Ce contact est sans glissement, puisque le rouleau est monté libre en rotation autour de l'axe. La vitesse de rotation de la filière est de l'ordre de 100 à 150 tours par minute, ce qui donne aux galets, plus petits, une vitesse 2 à 3 fois plus importante, par exemple 330 tours/minute. La matière qui est piégée entre la filière et le galet est donc comprimée, et s'introduit dans les perçages de la filière, et forme ainsi les granulés. Le fait que l'axe est excentré permet d'exercer des réglages entre le galet et la filière, pour écraser la matière.

Le palier ou le roulement nécessite un graissage pour éviter une usure prématurée. Il faut donc également un joint d'étanchéité, pour contenir le lubrifiant et empêcher l'introduction de particules externes. En effet de telles particules externes, de sciure de bois ou de poussière de luzerne mélangées à la graisse constitue une pâte à rôder qui use très rapidement les pièces en mouvement. Généralement des segments sont utilisés l'état de la technique. Néanmoins il est nécessaire d'assurer une présence constante de graisse au niveau des segments sinon ceux-ci risquent de se bloquer. On est donc amené à maintenir une certaine pression de graisse, ce qui a pour conséquence que de la graisse sort constamment par le segment. Pour minimiser les quantités perdues, on peut sélectionner des graisses relativement visqueuses, qui s'échappent moins facilement que graisses plus fluides, mais alors il faut augmenter la pression pour garantir la présence de graisse aux segments.

Certains dispositifs de l'état de la technique ne donnent pas satisfaction, et occasionnent d'importantes consommations de graisse et donc aussi de pollution de l'environnement par les graisses perdues. En particulier la graisse perdue vient polluer par exemple les granulés de luzerne, ce qui peut compromettre leur qualité alimentaire. Par ailleurs un échauffement important limite la durée de vie des galets ou roulements.

Le but de la présente invention est de résoudre au moins en partie ces inconvénients, en proposant un galet presseur comportant un axe, au moins un roulement, et un rouleau périphérique mobile en rotation par rapport audit axe, et comportant un circuit d'amenée d'un lubrifiant depuis ledit axe jusqu'audit roulement, et eux joints d'étanchéité entre ledit rouleau périphérique et ledit axe.

C'est ainsi que dans une première démarche on a imaginé mettre en oeuvre deux joints d'étanchéité de part et d'autre dudit roulement. Ces joints peuvent comporter chacun une lèvre principale en caoutchouc synthétique, et une lèvre flottante métallique, empêchant ainsi toute fuite de lubrifiant Ce type de joint présente la particularité d'assurer une parfaite étanchéité. Il permet donc d'une part de remplacer une graisse visqueuse par une huile plus fluide, ce qui permet d'améliorer la capacité de refroidissement, d'autre part ce joint permet d'éviter la pollution granulés produits en graisse ou huile, ou au moins de la réduire drastiquement.

Dans une seconde démarche, on a cherché à créer une circulation de lubrifiant ans le roulement, pour permettre de le refroidir. C'est ainsi qu'on a disposé une rondelle de récupération du lubrifiant, permettant de ressortir le lubrifiant se trouvant dans le roulement, de préférence en puisant en un point éloigné des points d'alimentation. Le lubrifiant récupéré peut alors passer par un dispositif de refroidissement et/ou d'autres traitements appropriés, puis être recyclé vers le roulement. Ce type de circulation d'une huile de refroidissement est connue du document WO 01/42672.On peut utiliser une huile plus fluide et on peut la faire circuler sans risque de pollution significative des granulés produits, ni de consommation excessive d'huile.

Dans une troisième démarche on a cherché à utiliser comme lubrifiant une huile, beaucoup plus fluide que la graisse, et d'augmenter le débit. Cela a pour conséquence que ce flux d'huile passant dans le roulement en emporte la chaleur produite, et le maintient à des températures proches de l'ambiante. De ce fait la urée de vie des roulements est nettement améliorée.

Enfin par une quatrième démarche inventive, on a cherché à implanter des roulements à rouleaux cylindriques à la place des roulements à rouleaux coniques. Cela permet un montage original, où un premier roulement est en appui sur un premier épaulement de l'axe, un deuxième roulement en appui sur le premier roulement par l'intermédiaire d'une rondelle cale, et une cale est serrée contre le deuxième roulement par un écrou de blocage. Ainsi les bagues internes es roulements sont maintenues serrées entre un épaulement de l'axe et un écrou de blocage. Cela crée un fonctionnement avec très peu de jeu d'usure. Dans une variante préférée de l'invention, ce jeu d'usure est rattrapé automatiquement par des rondelles Belleville montées entre l'écrou de blocage et la cale de serrage des roulements.

La présente invention, voir revendication 1, concerne également une presse à granulés comportant un au moins un galet presseur selon l'invention, voir revendication 8. Ce galet presseur opéré avantageusement à l'intérieur de la filière, mais il peut aussi opérer par l'extérieur de la filière, en pressant les granulés vers l'intérieur, sans sortir du cadre de la présente invention.

D'autres avantages de l'invention apparaîtront à la lecture de la description d'exemples de réalisation et des dessins annexés, dans lesquels :
- la figure 1 représente en vue en perspective un galet presseur selon un premier mode de réalisation de l'invention,
- la figure 2 représente selon une deuxième vue en perspective, le galet presseur de la fig. 1,
- la figure 3 représente une vue en coupe du galet presseur de la fig. 1,
- la figure 4 représente en vue en perspective un galet presseur selon un deuxième mode de réalisation de l'invention,
- la figure 5 représente selon une deuxième vue en perspective, le galet presseur de la fig. 4,
- la figure 6 représente une vue en coupe du galet presseur de la fig. 4.
- La figure 7 représente en détail un joint à racleur métallique tel qu'implanté sur un galet presseur tel que ceux des fig. 1 ou 4.

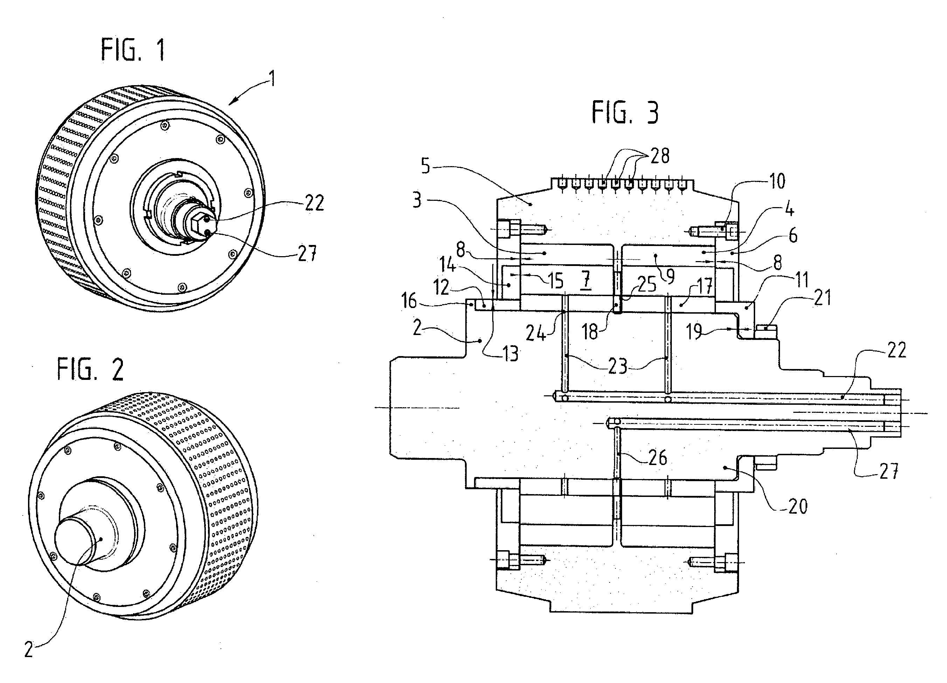

Tel que visible dans les figures 1 à 3 du dessin ci-joint, la présente invention, selon un premier mode de réalisation, a trait à un galet presseur 1 comportant un axe excentré 2, deux roulements 3, 4 à rouleaux cylindriques, et un rouleau périphérique 5. Le mode de réalisation représenté comporte des roulements, mais des paliers peuvent aussi être utilisés. Deux flasques 6 viennent fermer l'espace 7 dans lequel opèrent les roulements 3, 4, de part et d'autre desdits roulement s, en maintenant un jeu fonctionnel 8 avec la bague externe 9 dudit roulement 3, 4. Lesdits flasques 6 sont fixés sur le rouleau périphérique 5, par exemple par des vis 10 ou tout autre moyen de fixation démontable. Ces flasques 6 viennent entourer chacun une cale 11, 12 fixée sur l'axe excentré 2, avec un jeu fonctionnel 13 entre le flasque 6 et les cales 11, 12, pour garantir la mobilité en rotation du cylindre par rapport à l'axe excentré 2. En option la cale 12 peut être supprimée, et l'épaulement 16 décalé d'autant, le premier roulement 3 venant s'appuyer directement sur ledit épaulement 16. Deux joints d'étanchéité 14 à racleur métallique sont disposés chacun dans un logement d'un flasque 6 et ajustés sur la surface desdites cales 11, 12, pour fermer le jeu 13 laissé ouvert entre les flasques 6 et les cales 11, 12. Un jeu latéral 15 est disposé entre lesdits joints d'étanchéité 14 et les roulements 3, 4.

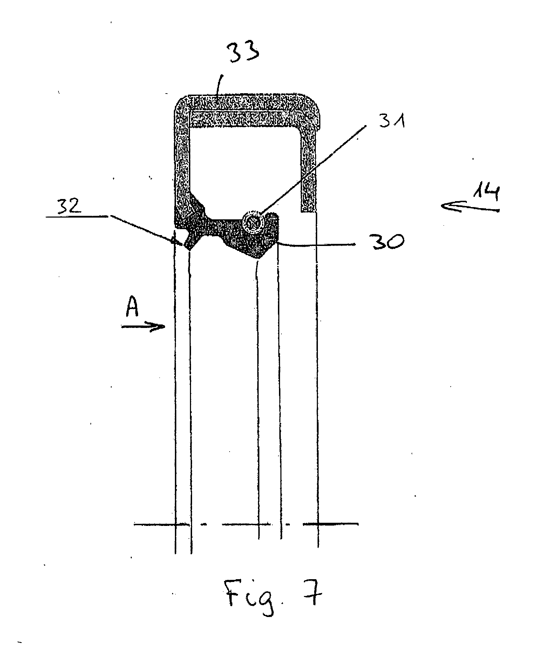

Le joint d'étanchéité 14 est représenté en détail à la fig. 7. Cette figure est une section radiale du joint, qui présente une symétrie circulaire. Le joint 14 comprend une lèvre principale 30 en caoutchouc synthétique, par exemple en élastomère fluoré alimentaire. Il comprend par ailleurs une lèvre flottante 31 métallique, par exemple en laiton. La lèvre flottante 31 peut être un ressort en forme de cercle, qui enserre la lèvre principale, pour l'appuyer sur la cale 11, 12 avec laquelle le joint doit assurer l'étanchéité. Cette lèvre flottante n'est maintenue axialement que par la lèvre principale, et radialement par l'appui sur ladite cale 11, 12 par l'intermédiaire de la lèvre principale 30 d'une part, et la force élastique du ressort lui-même d'autre part. C'est ce type de montage qui explique le terme « flottante » de l'expression « lèvre flottante ».

Selon un autre mode de réalisation du joint 14, la lèvre principale 30 est attachée à un support rigide 33, de préférence métallique, et il peut comprendre en outre une lèvre anti-poussière 32. Il comprend par ailleurs un ressort 31 métallique, par exemple en inox, ou en laiton, monté flottant sur la lèvre principale, et avec fonction de l'appliquer sur les bagues 11, 12. Ainsi l'effort d'application sur ces bagues 11, 12 est amélioré. Ce ressort 31 présente la forme d'un anneau (la fig. 7 fait apparaître la section) maintenu axialement uniquement par la lèvre principale 30. Son maintien radial est assuré par l'appui sur les cales 11, 12 d'une part, et la force élastique du ressort lui-même d'autre part, enserrant la lèvre principale sur la cale 11, 12.

Quand on introduit le joint 14 sur une des cales 11 ou 12, le joint anti-poussière 32 présente un diamètre d'ouverture supérieur au diamètre de la cale 11, 12, alors que la lèvre principale 30 présente un diamètre d'ouverture légèrement inférieur au diamètre de la cale 11, 12. De cette manière, la mise en place du joint 14 sur la cale 11, 12, dans le sens de la flèche A, contraint la lèvre principale, qui se déforme. Le ressort 31 lui permet d'opposer une résistance, et donc d'exercer un effort d'application sur la cale. Parallèlement, la déformation de la lèvre principale 30 a pour effet d'incliner la lèvre anti-poussière 32 de sorte que celle-ci entre en contact avec la cale 11, 12, et établit une étanchéité complémentaire.

Le support métallique 33 non seulement tient la lèvre principale 30, mais également protège la lèvre principale 30, la lèvre anti-poussière 32 et le ressort 31 de l'agression de particules.

Un tel joint a été testé à 17 bars, et il n'a été observé aucune fuite d'huile. Il résiste à une température de 250°C.

La cale 12 s'appuie longitudinalement contre un épaulement 16 de l'axe excentré 2. La bague interne 17 du premier roulement 3 s'appuie contre la cale 12. En option elle s'appuie directement contre l'épaulement 16 décalé. Une rondelle cale 18 s'appuie contre la bague interne 17 de ce premier roulement 3, et le deuxième roulement 4 vient s'appuyer dessus. La cale 11 s'appuie contre la bague interne 17 du deuxième roulement 4 , tout en assurant un jeu 19 par rapport à un deuxième épaulement 20 de l'axe excentré 2, en vue d'assurer le contact de la cale 11 sur la bague interne 17 du roulement 4. Un écrou de blocage 21 bloque la cale 11, et la maintient en pression longitudinale. Selon un mode préféré de réalisation de l'invention, pour permettre un rattrapage de jeu automatique, une ou plusieurs rondelles élastiques, par exemple rondelles Belleville, sont disposées entre la cale 11 et l'écrou de blocage 21. La pression s'exerce obligatoirement sur la bague interne 17 du roulement 4 du fait du jeu 19 disposé par rapport à l'épaulement 20. Ce type de montage permet de rattraper tous les jeux longitudinaux par une simple action sur l'écrou de blocage 21, ou de manière automatique grâce aux rondelles élastiques.

Une conduite principale 22 d'amenée d'huile est disposée dans la partie centrale de l'axe excentré 2, depuis une extrémité dudit axe excentré 2 et jusqu'au droit des roulements 3, 4. Plusieurs conduites radiales 23 relient cette conduite principale 22 à l'espace 7, en y débouchant sensiblement au milieu de chaque roulement 3, 4, dont on a pris soin de percer également la bague interne 17. Une gouttière 24 est disposée sur la circonférence de l'axe excentré 2 au droit de ces conduites radiales 23, ou sur la circonférence interne de la bague interne des roulements 3 et 4, pour permettre une répartition de l'huile sur la circonférence de l'axe excentré 2. En introduisant de l'huile dans la conduite principale 22, ladite huile est donc conduite jusqu'aux roulements 3, 4, et peut exercer sa fonction de graissage desdits roulements. Une rondelle cale 18 est disposée sur l'axe excentré 2 entre les deux bagues internes 17 des roulements 3, 4. Cette rondelle cale 18 est pourvue de 24 semi perçages radiaux 25, par lesquels l'huile présente dans l'espace 7 peut passer pour rejoindre des conduites radiales de retour 26, connectées à une conduite principale de retour 27, complétant ainsi le circuit de retour de l'huile. La conduite principale de retour 27 débouche en bout de l'axe excentré 2, en un point proche du début de la conduite principale 22. Ces deux points sont alors reliés à un circuit de récupération non représenté, comportant notamment une pompe, et une unité de traitement avec un échangeur de chaleur, par exemple à plaques, pour rafraîchir l'huile, éventuellement un filtre, pour recycler l'huile récupérée. Un circuit de refroidissement au fréon alimente ledit échangeur en froid. Un tel système permet de maintenir la température des galets entre 45 et 55 °C.

Les joints d'étanchéité 14 à racleurs métalliques opèrent donc par raclage sur les cales 11, 12, lesquelles cales sont en un matériau approprié, en particulier de grande dureté. Ces joints d'étanchéité 14 et cales 11, 12 peuvent être remplacés facilement en cas d'usure. En démontant les flasques 6, on peut déposer les joints 14. Puis on démonte l'écrou de blocage, ce qui permet de déposer la cale 11, puis le roulement 4, le rouleau 5, la rondelle cale 18, le roulement 3 et la cale 12.

Le rouleau périphérique 5 est pourvu sur sa périphérie de nombreux trous borgnes 28, permettant d'améliorer l'efficacité du pressage, et notamment l'absence de glissement entre le galet presseur 1 et la filière de la presse à granulés.

Un dispositif de refroidissement de l'axe excentré 2 est également prévu, pour éviter le risque d'inflammation de la sciure de bois. Cet axe excentré 2 est de préférence en acier, traité à coeur et en surface.

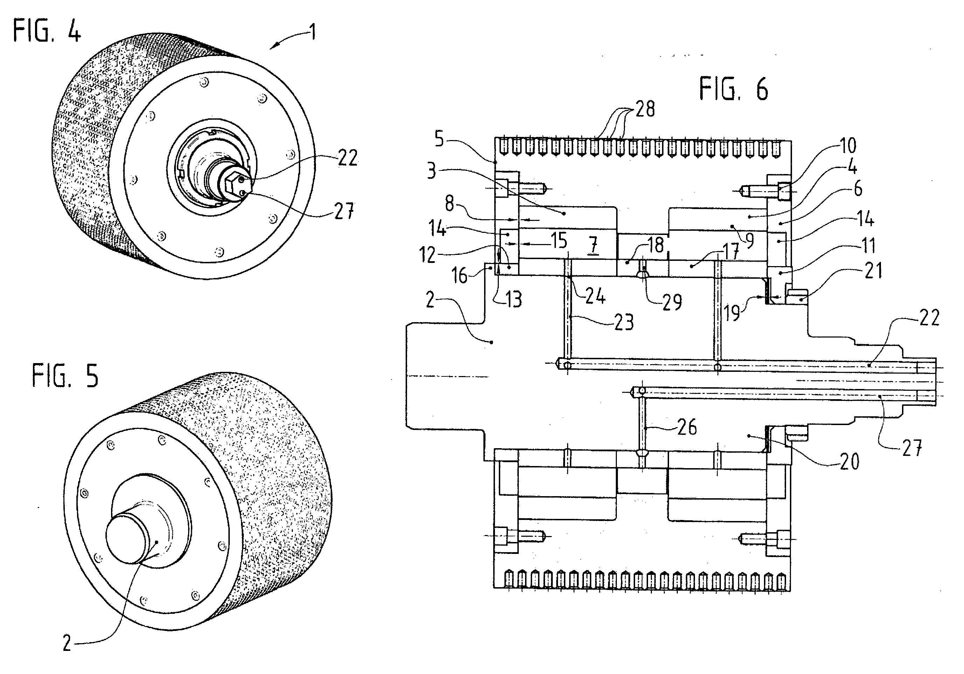

Tel que visible sur les fig. 4 à 6, du dessin ci-joint, la présente invention, selon un deuxième mode de réalisation, a trait à un galet presseur 1 comportant un axe excentré 2, deux roulements 3, 4 à rouleaux cylindriques, et un rouleau périphérique 5.

Le rouleau périphérique 5 est pourvu sur sa périphérie de nombreux trous borgnes 28, permettant d'améliorer l'efficacité du pressage et l'absence de glissement entre le galet presseur 1 et la filière de la presse à granulés. La face externe du rouleau périphérique 5 est ici rendue cylindrique sur une plus grande longueur, pour augmenter la surface de contact entre le galet presseur et la filière de la presse à granulés, ainsi que le nombre de trous borgnes 28.

Dans le but de standardiser les approvisionnements, les mêmes roulements 3, 4 sont utilisés que pour les galets presseurs 1 pour bois.

Les roulements 3, 4 sont séparés l'un de l'autre par la rondelle cale 18, et celle-ci est réalisée plus épaisse pour un galet presseur 1 pour luzerne. Elle présente donc suffisamment de matière pour comprend re des perçages 29 en son milieu, au lieu des semi-perçages 25 disposés sur la rondelle cale 18 pour un galet presseur pour bois.

Le même axe excentré 2 peut être utilisé que pour un galet presseur 1 pour bois, toujours dans un souci de standardisation. Néanmoins dans ce cas l'arrivée de l'huile sur les roulements 3, 4 n'est plus centrée.

On peut aussi préparer des axes excentrés 2 **semi-finis,** sans le perçage des conduites radiales 23 d'alimentation, ni les gouttières 24, et réaliser ces derniers usinages à la commande. Cela permet de livrer à délai court, tout en minimisant le stock de produits semi-finis.

Un dispositif de refroidissement de l'axe excentré est également prévu, pour éviter le risque d'inflammation de la poussière environnante.

De manière essentielle, l'avantage de la présente invention est de proposer une solution pour un galet presseur 1 qui permette d'assurer la lubrification des roulements 3, 4 avec un lubrifiant fluide et avec très peu de fuites. Un avantage supplémentaire vient de la collecte du lubrifiant, qui permet d'augmenter le débit et de diminuer la viscosité du lubrifiant, et ainsi d'obtenir un refroidissement efficace des roulements 3, 4. Des essais ont permis de constater une durée de vie de 3000h d'un galet presseur 1 selon l'invention, nettement supérieure à la durée de vie habituelle des galets presseurs de l'état de la technique.

L'absence de fuite grâce à l'invention permet également d'éviter la pollution des granulés produits par la graisse ou l'huile de lubrification. Une installation de l'état de la technique consomme entre 35 et 40 tonnes de graisse par an, qui se retrouve majoritairement dans les granulés, servant à la nourriture d'animaux. L'invention permet d'éviter cette pollution, ou au moins de la réduire drastiquement.

## Revendications

1. Galet presseur (1) pour une presse à granulés, comportant un axe (2), au moins un roulement (3, 4) et un rouleau périphérique (5) mobile en rotation par rapport audit axe (2), et comportant un circuit d'amenée d'un lubrifiant depuis ledit axe (2) jusqu'audit roulement (3, 4), et deux joints d'étanchéité (14) entre ledit rouleau périphérique (5) et ledit axe (2), ledit galet comporte un circuit de retour dudit lubrifiant depuis ledit roulement (3, 4) vers ledit axe (2), de sorte à former un circuit de refroidissement par ledit lubrifiant, **caractérisé par le fait qu'**il comporte deux roulements (3, 4) à rouleaux cylindriques, un premier roulement (3) en appui sur un premier épaulement (16) de l'axe (2), un deuxième roulement (4) en appui sur le premier roulement (3) par l'intermédiaire d'une rondelle cale (18), et qu'il comporte une cale (11) serrée contre le deuxième roulement (4) par un écrou de blocage (21).

2. Galet presseur (1) selon la revendication 1, dans lequel chaque joint d'étanchéité (14) comporte une lèvre principale (30) en caoutchouc synthétique, et une lèvre flottante (31) métallique, empêchant ainsi toute fuite de lubrifiant.

3. Galet presseur (1) selon la revendication précédente, dans lequel ladite lèvre flottante (31) métallique est un ressort circulaire (31), de préférence en acier inoxydable, monté flottant sur ladite lèvre principale (30), et destiné, en position de montage, à appuyer ladite lèvre principale (30) sur la pièce (11, 12) avec laquelle le joint (14) est destiné à produire une étanchéité.

4. Galet presseur (1) selon l'une des revendications précédentes, dans lequel chaque joint d'étanchéité (14) comporte une lèvre principale (30) attachée à un support rigide (33), de préférence métallique, et un ressort circulaire (31), de préférence en acier inoxydable, monté flottant sur ladite lèvre principale (30), et destiné, en position de montage, à appuyer ladite lèvre principale (30) sur la pièce (11, 12) avec laquelle le joint (14) est destiné à produire une étanchéité.

5. Galet presseur (1) selon l'une des deux revendications précédentes, comprenant en outre une lèvre anti-poussière (32), destinée en position de montage à entrer en contact sur la pièce (11, 12) avec laquelle le joint (14) est destiné à produire une étanchéité de sorte à améliorer ladite étanchéité.

6. Galet presseur (1) selon l'une des revendications précédentes dans lequel ledit lubrifiant est de faible viscosité, de type huile.

7. Galet presseur (1) selon l'une des revendications précédentes comportant en plus deux flasques (6) fermant l'espace entre ledit rouleau (5) et ledit axe (2), lesquels flasques comportent chacun un logement en réception dudit joint d'étanchéité (14).

8. Presse à granulés, en particulier pour du bois ou de la luzerne, comportant une filière et un galet presseur (1) selon l'une des revendications précédentes.

9. Presse à granulés selon la revendication précédente dans laquelle ledit galet presseur (1) est disposé à l'intérieur de ladite filière.

## Patentansprüche

1. Andruckrolle (1) für eine Pelletpresse, umfassend eine Achse (2), mindestens ein Lager (3, 4) und eine relativ zu der besagten Achse (2) drehbewegliche Umfangsrolle (5), und umfassend einen Kreislauf zum Zuführen von Schmiermittel von der besagten Achse (2) bis zu dem besagten Lager (3, 4), und zwei Dichtungen (14) zwischen der besagten Umfangsrolle (5) und der besagten Achse (2), wobei die besagte Rolle eine Rücklaufkreis für das besagte Schmiermittel von dem besagten Lager (3, 4) zu der besagten Achse (2) umfasst, sodass ein Kreislauf zum Abkühlen durch das besagte Schmiermittel gebildet wird, **dadurch gekennzeichnet, dass** sie zwei zylinderförmige Rollenlager (3, 4) umfasst, ein erstes Lager (3), das auf einem ersten Schulter (16) der Achse (2) ruht, ein zweites Lager (4), das über eine Klemmscheibe (18) auf dem ersten Lager (3) ruht, und dass sie eine Scheibe (11) umfasst, die durch eine Sperrmutter (21) gegen dem zweiten Lager (4) gespannt ist.

2. Andruckrolle (1) nach Anspruch 1, wobei jede Dichtung (14) eine Hauptlippe (30) aus synthetischem Gummi und eine schwimmende Lippe (31) aus Metall umfasst, die also ein Austreten von Schmiermittel verhindern.

3. Andruckrolle (1) nach dem vorhergehenden Anspruch, wobei die besagte schwimmende Metalllippe (31) eine kreisförmige Feder (31), vorzugsweise aus Edelstahl, ist, die schwimmend auf der besagten Hauptlippe (30) montiert und dazu bestimmt ist, in Montagelage die besagte Hauptlippe (30) auf dem Teil (11, 12), mit dem die Dichtung (14) vorgesehen ist, um eine Abdichtung zu erzeugen, zu drücken.

4. Andruckrolle (1) nach einem der vorhergehenden Ansprüche, wobei jede Dichtung (14) eine an einem starren Träger (33) befestigte Hauptlippe (30), vorzugsweise aus Metall, und eine kreisförmige Feder (31), vorzugsweise aus Edelstahl, umfasst, die schwimmend auf der besagten Hauptlippe (30) montiert und dazu bestimmt ist, in Montagelage die besagte Hauptlippe (30) auf dem Teil (11, 12), mit dem die Dichtung (14) vorgesehen ist, um eine Abdichtung zu erzeugen, zu drücken.

5. Andruckrolle (1) nach einem der zwei vorhergehenden Ansprüche, umfassend außerdem eine Staubschutzlippe (32), die dazu bestimmt ist, in Montagelage mit dem Teil (11, 12) in Berührung zu treten, mit dem die Dichtung (14) vorgesehen ist, um eine Abdichtung zu erzeugen, sodass die besagte Abdichtung verbessert wird.

6. Andruckrolle (1) nach einem der vorhergehenden Ansprüche, wobei das Schmiermittel niedriger Viskosität ist, wie Öl.

7. Andruckrolle (1) nach einem der vorhergehenden Ansprüche, umfassend außerdem zwei Flansche (6), die den Raum zwischen der besagten Rolle (5) und der besagten Achse (2) schließen, wobei die Flansche jeweils eine Aufnahme für die besagte Dichtung (14) umfassen.

8. Pelletpresse, insbesondere für Holz oder Luzerne, umfassend eine Düse und eine Andruckrolle (1) nach einem der vorgehenden Ansprüche.

9. Pelletpresse nach dem vorhergehenden Anspruch, wobei die Andruckrolle (1) innerhalb der besagten Düse angeordnet ist.

## Claims

1. Pressure roller (1) for a pellet press, including an axis (2), at least one bearing (3, 4) and a peripheral roller (5) movable in rotation relative to said axis (2), and including a circuit for supplying lubricant from said axis (2) to said bearing (3, 4) and two seals (14) between said peripheral roller (5) and said axis (2), said roller comprises a circuit for returning said lubricant from said bearing (3, 4) to said axis (2), so as to form a circuit for cooling by said lubricant, wherein it includes two cylindrical roller bearings (3, 4), a first bearing (3) resting on a first shoulder (16) of the axis (2), a second bearing (4) resting on the first bearing (3) through a washer (18), and wherein it includes a wedge (11) clamped against the second bearing (4) by a locking nut (21).

2. Pressure roller (1) according to claim 1, wherein each seal (14) includes a main lip (30) made of synthetic rubber, and a metallic floating lip (31), thus preventing any lubricant leakage.

3. Pressure roller (1) according to the preceding claim, wherein said metallic floating lip (31) is a circular spring (31), preferably made of stainless steel, mounted floating on said main lip (30), and aimed, in mounting position, at pressing said main lip (30) against the part (11, 12), which the seal (14) is aimed at producing a seal with.

4. Pressure roller (1) according to one of preceding claims, wherein each seal (14) includes a main lip (30) attached to a rigid support (33), preferably a metallic support, and a circular spring (31), preferably made of stainless steel, mounted floating on said lip main (30) and aimed, in mounting position, at supporting said main lip (30) on the part (11, 12), which the seal (14) is aimed at producing a seal with.

5. Pressure roller (1) according to one of the preceding two claims, comprising in addition a dust-protection lip (32) aimed, in mounting position, at entering into contact on the part (11, 12), which the seal (14) is aimed at producing a seal with, so as to improve said tightness.

6. Pressure roller (1) according to one of the preceding claims, wherein said lubricant has a low viscosity, such as oil.

7. Pressure roller (1) according to one of the preceding claims, including in addition two flanges (6) closing the space between said roller (5) and said axis (2), which flanges each comprise a recess for receiving said seal (14).

8. Pellet press, in particular for wood or alfalfa, including a die and a pressure roller (1) according to one of the preceding claims.

9. Pellet press according to the preceding claim, wherein said pressure roller (1) is arranged inside said die.
